# EUROPÄISCHE PATENTSCHRIFT

(11) **EP 0 846 602 B1**
(45) Veröffentlichungstag und Bekanntmachung des Hinweises auf die Patenterteilung: **14.04.2004**
(21) Anmeldenummer: 97119223.2
(22) Anmeldetag: 04.11.1997
(51) Int. Cl.: B60R 25/02

(54) **Vorrichtung zur Ansteuerung mindestens eines Sperriegels und Verwendung der Vorrichtung zur Lenkungsverriegelung von Kraftfahrzeugen**
Device for driving at least one locking bolt and the use of the device in a steering lock of a motor vehicle
Dispositif de commande pour au moins un verrou de blockage et son utilisation dans un antivol de direction pour automobile

(30) Priorität: 06.12.1996 DE 19650751
(43) Veröffentlichungstag der Anmeldung: 10.06.1998
(73) Patentinhaber: Valeo Sicherheitssysteme GmbH, 85253 Erdweg (DE)
(72) Erfinder: Lieb, Kurt, 63500 Seligenstadt (DE); Richter, Martin, 63477 Maintal (DE); Janz, Manfred, 45127 Essen (DE)
(74) Vertreter: Podszus, Burghart, Dipl.-Phys., Dipl.-Wirtsch.-Ing.

(56) Entgegenhaltungen:
- DE-C- 4 436 326
- DE-C- 19 621 326

## Beschreibung

Die Erfindung betrifft eine Vorrichtung zur Ansteuerung mindestens eines von einer ersten Stellung (Verriegelungsstellung) in eine zweite Stellung (Entriegelungsstellung) betätigbaren Sperriegels mit den im Oberbegriff des Anspruchs 1 angegebenen Merkmalen. Die Erfindung bezieht sich ferner auf eine Verwendung einer derartigen Vorrichtung zur Lenkungsverriegelung von Kraftfahrzeugen.

Aus dem Patentschrift DE 19 621 326 C (nachveräffentlicht) ist eine Vorrichtung zur Ver- und Entriegelung der Lenkung eines Kraftfahrzeuges bekannt. Dabei werden zwei an einer Antriebswelle befestigte Sperriegel durch entsprechende Aktivierung eines Elektromotors in die Nuten eines an der Lenkung befestigten Schließringes hinein- bzw. im Falle der Entriegelung aus den Nuten herausgeschwenkt.

Nachteilig bei dieser Vorrichtung ist u.a., daß der Elektromotor, je nach Vorgang, eine unterschiedliche Drehrichtung aufweisen muß und daher eine separate Umschaltvorrichtung für den Motor erforderlich ist.

Der Erfindung liegt die Aufgabe zugrunde, eine Vorrichtung der eingangs erwähnten Art anzugeben, mit der eine Ver- und Entriegelung, z.B. einer Kraftfahrzeug-Lenkung, durch einen Fremdantrieb möglich ist, ohne daß hierzu die Drehrichtung des Antriebes geändert werden muß.

Diese Aufgabe wird erfindungsgemäß durch die Merkmale des kennzeichnenden Teils des Anspruchs 1 bzw. des Anspruchs 2 gelöst. Der Anspruch 7 enthält eine besonders vorteilhafte Verwendung der Vorrichtung. Weitere, besonders vorteilhafte Ausgestaltungen der Erfindung offenbaren die Unteransprüche.

Die Erfindung beruht im wesentlichen auf dem Gedanken, daß mit dem Antrieb ein Antriebsrad verbunden ist, innerhalb bzw. außerhalb dessen die Antriebswelle des Sperriegels exzentrisch angeordnet ist. An dem Antriebsrad ist ein Innen- bzw. ein Außennocken und an der Antriebswelle des Sperriegels ein Mitnehmernocken angeordnet, derart, daß, ausgehend von der Verriegelungsstellung, bei Drehung des Antriebsrades in eine vorgegebene Richtung der Innen- bzw. Außennocken gegen den Mitnehmernocken drückt und dadurch die Antriebswelle gegen den Druck einer Feder mitdreht. Der Innen- bzw. Außennocken und der Mitnehmernocken gelangen erst außer Eingriff, wenn der Sperriegel seine Entriegelungsstellung erreicht hat. Zur Fixierung des Sperriegels in der Entriegelungsstellung ist ein federbelastetes Sicherungselement vorgesehen. Erreicht der Sperriegel die Entriegelungsstellung, greift das Sicherungselement in eine dafür vorgesehene Rastnut des Sperriegels bzw. eines mit dem Sperriegel direkt verbundenen Teiles ein. Hat der Sperriegel die Entriegelungsstellung erreicht, kann der Antrieb mit Hilfe eines Schalters abgeschaltet werden, auf den das Sicherungselement bei seiner Bewegung in die Rastnut einwirkt.

Um den Sperriegel wieder in seine Verriegelungsstellung zu bringen, wird das Sicherungselement elektromagnetisch aus der Rastnut gezogen, so daß die Antriebswelle sich federbelastet in die Verriegelungsstellung zurückbewegen kann.

Weitere Einzelheiten und Vorteile der Erfindung ergeben sich aus den folgenden anhand von Figuren erläuterten Ausführungsbeispielen. Es zeigen:
- Fig.1: eine perspektivische Ansicht einer erfindungsgemäßen Vorrichtung, bei der es sich um eine in der Verriegelungsstellung befindliche Lenkungsverriegelung für ein Kraftfahrzeug mit zwei Sperriegeln handelt;
- Fig.2: eine Draufsicht auf die in Fig.1 dargestellte Lenkungsverriegelung;
- Fig.3: eine Seitenansicht der in Fig.2 dargestellten Vorrichtung entlang der dort mit III-III bezeichneten Schnittlinie;
- Fig.4: eine Seitenansicht der in Fig.2 dargestellten Vorrichtung entlang der dort mit IV-IV bezeichneten Schnittlinie;
- Fig.5: eine Fig.1 entsprechende perspektivische Ansicht der in ihrer Entriegelungsstellung befindlichen Lenkungsverriegelung, wobei ein Sicherungselement die Sperriegel in dieser Stellung fixiert;
- Fig.6 und 7: die den Fig.3 und 4 entsprechenden Ansichten der in ihrer Entriegelungsstellung befindlichen Lenkungsverriegelung und
- Fig.8: eine Fig.7 entsprechende Seitenansicht der Lenkungsverriegelung, wobei das Sicherungselement die Sperriegel freigegeben hat.

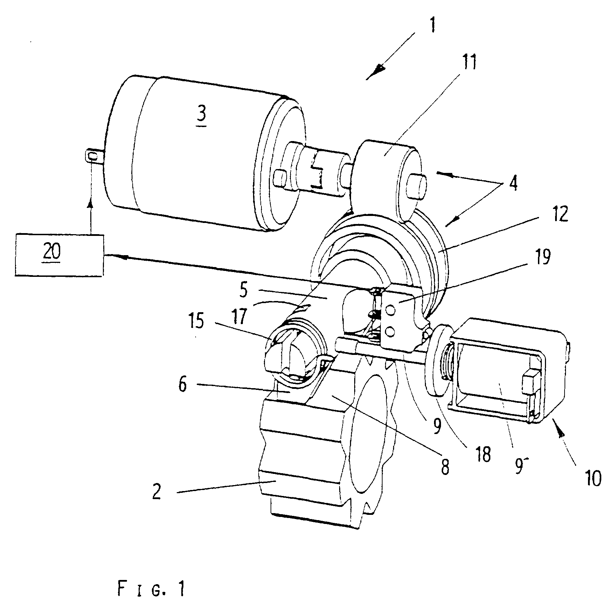

In Fig.1 ist mit 1 eine Vorrichtung zur Lenkungsverriegelung von Kraftfahrzeugen und mit 2 ein Schließring bezeichnet, der eine aus Übersichtlichkeitsgründen nicht dargestellte Lenksäule eines Kraftfahrzeuges umfaßt.

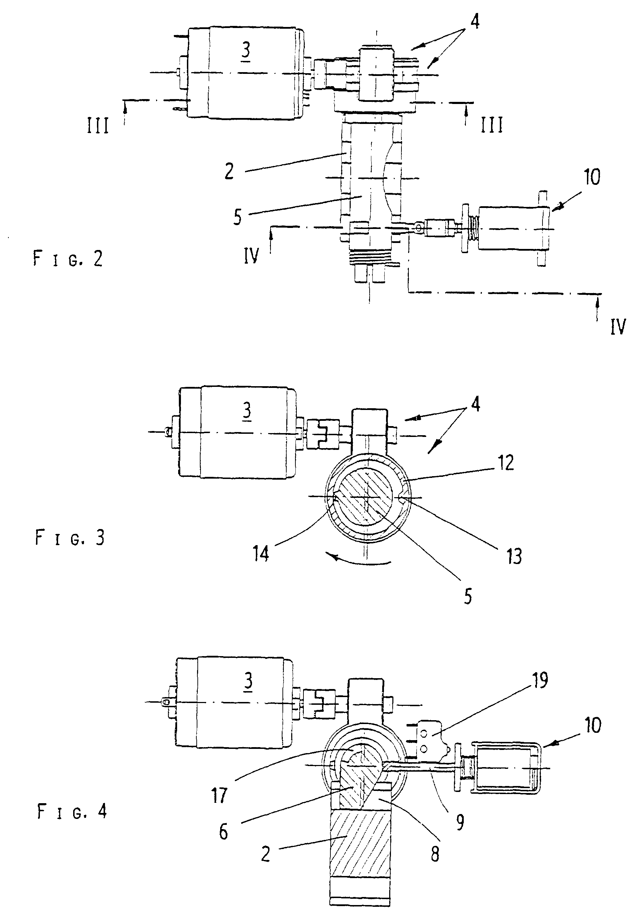

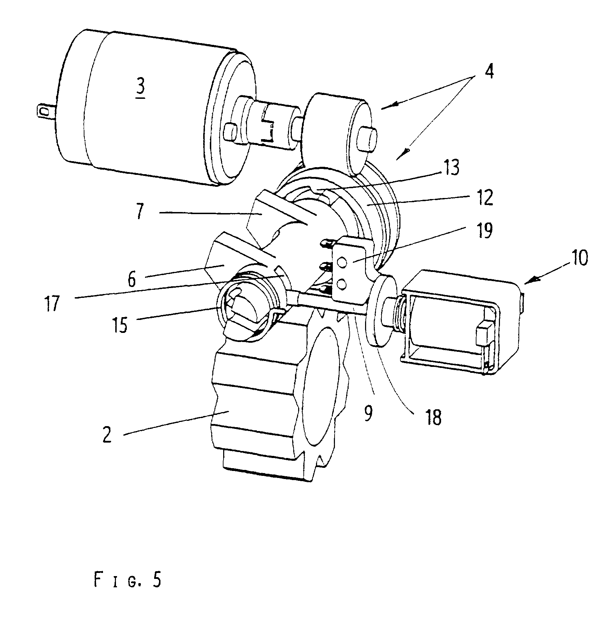

Die Vorrichtung 1 besteht im wesentlichen aus einem Elektromotor 3, der über ein Getriebe 4 eine Antriebswelle 5 antreibt, an der zwei Sperriegel 6, 7 (vgl. Fig.5) befestigt sind, welche in der Verriegelungsstellung (Fig.1-4) der Lenkungsverriegelung in entsprechende Nuten 8 des Schließringes 2 eingreifen und ein Verdrehen der Lenksäule verhindern. Außerdem ist ein aus einer Hubstange 9 und einem Hubmagneten 9' bestehendes Sicherungselement 10 vorgesehen, dessen Funktion nachfolgend noch näher erläutert wird.

Das Getriebe 4 umfaßt ein über eine Schnecke 11 mit dem Elektromotor 3 verbundenes Antriebsrad 12, welches einen Innennocken 13 trägt. Innerhalb des Antriebsrades 12 ist die Antriebswelle 5 der Sperriegel 6, 7 exzentrisch angeordnet. Die Antriebswelle 5 trägt einen Mitnehmernocken 14.

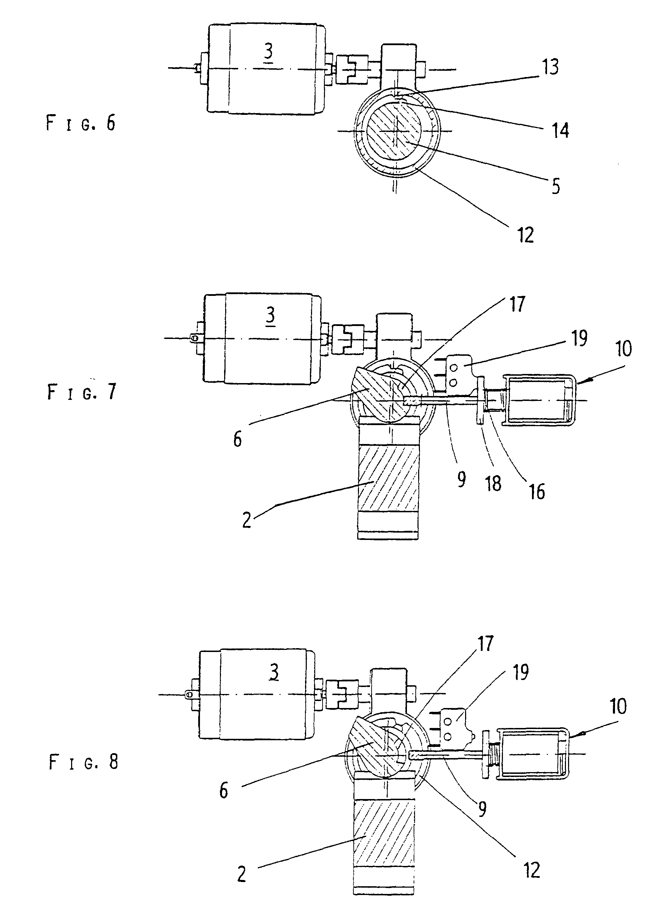

Innennocken 13 und Mitnehmernocken 14 sind derart zueinander angeordnet, daß beim Anlaufen des Elektromotors 3 der Innennocken 13 im Uhrzeigersinn gedreht wird, gegen den Mitnehmernocken 14 drückt und dadurch die Antriebswelle 5 gegen den Druck einer Drehfeder 15 (Fig.1) mitdreht. Sind die Sperriegel 6, 7 aus den Nuten 8 des Schließringes 2 herausgeschwenkt (Entriegelungsstellung), wird die durch eine Feder 16 belastete Hubstange 9 des Sicherungselementes 10 in eine Rastnut 17 der Antriebswelle 5 gedrückt und fixiert damit die Sperriegel 6, 7 in ihrer Entriegelungsstellung (Fig.5-7).

An der Hubstange 9 ist ein tellerförmiger Anschlag 18 vorgesehen, der bei der Verschiebung der Hubstange 9 in die Rastnut 17 einen Mikroschalter 19 betätigt. Dieser erzeugt ein entsprechendes Schaltsignal, welches über eine elektronische Schaltungsvorrichtung 20 (vgl. Fig.1) ein Abschalten des Elektromotors 3 bewirkt.

Um die Lenkungsverriegelung von der Entriegelungsstellung wieder in die Verriegelungsstellung zu bringen, wird die Hubstange 9 durch den Hubmagneten 9' (z.B. durch Bestromung beim Abzug des Zündschlüssels) aus der Rastnut 17 der Antriebswelle 5 herausgezogen und der Elektromotor 3 kurzzeitig bestromt (Fig.8). Dadurch wird das Antriebsrad 12 kurzzeitig weiter in Uhrzeigerrichtung gedreht, bis der Innennocken 13 den Mitnehmernocken 14 überfährt und beide Nocken außer Eingriff gelangen. Durch die Drehfeder 15 werden die Antriebswelle 5 und damit die Sperriegel 6, 7 in die Verriegelungsstellung zurückgeschwenkt (Fig.1-4).

Die Erfindung ist selbstverständlich nicht auf das vorstehend beschriebene Ausführungsbeispiel beschränkt. So kann beispielsweise das kurzzeitige Bestromen des Elektromotors beim Verriegeln entfallen, wenn das Antriebsrad sich nach Erreichen der Verriegelungsstellung noch ein Stück weiterdreht und der Innennocken den Mitnehmernocken so lange mitnimmt, bis beide Nocken außer Eingriff gelangen. Hierzu ist es erforderlich, daß die Rastnut 17 -wie den Fig.1, 4, 5, 7 und 8 entnehmbar- als eine in Drehrichtung verlaufende Längsnut entsprechender Länge ausgebildet ist.

Bei dem Antrieb 3 muß es sich keineswegs zwingend um einen Elektromotor handeln, sondern es kann sich auch um einen fluidischen Antrieb (z.B. Hydraulikantrieb) handeln.

Außerdem ist die erfindungsgemäße Vorrichtung nicht zwingend auf eine Lenkungsverriegelung mit an der Lenksäule befestigtem Schließring beschränkt, sondern kann auch z.B. bei Kraftfahrzeugtürschlössern zum Einsatz kommen, bei denen ein Verund Entriegelungsmotor mit nur einer Drehrichtung angestrebt wird.

Schließlich kann die Antriebswelle des Sperriegels auch als Hohlwelle ausgebildet sein, innerhalb welcher das Antriebsrad exzentrisch angeordnet ist. Anstatt eines Innennockens ist in diesem Fall an dem Antriebsrad ein Außennocken angeordnet, und der Mitnehmernocken der Antriebswelle als Innennocken ausgebildet.

### Bezugszeichenliste

- 1: Vorrichtung
- 2: Schließring
- 3: Antrieb, Fremdantrieb, Elektromotor
- 4: Getriebe
- 5: Antriebswelle
- 6,7: Sperriegel
- 8: Nut
- 9: Hubstange
- 9': Hubmagnet
- 10: Sicherungselement
- 11: Schnecke
- 12: Antriebsrad
- 13: Innennocken
- 14: Mitnehmernocken
- 15: Feder, Drehfeder
- 16: Feder (Sicherungselement)
- 17: Rastnut
- 18: Anschlag
- 19: Schalter, Mikroschalter
- 20: elektronische Schaltungsvorrichtung

## Patentansprüche

1. Sperriegel und Vorrichtung zur Ansteuerung des mindestens von einer Verriegelungsstellung in eine Entriegelungsstellung betätigbaren, mit einer Antriebswelle (5) versehenen Sperriegels (6,7), wobei der Sperriegel (6,7) über ein Getriebe (4) mit einem Antrieb (3) verbunden ist, **gekennzeichnet durch** die Merkmale:
a) das Getriebe (4) umfaßt ein mit dem Antrieb (3) in Verbindung stehendes Antriebsrad (12), innerhalb dessen die Antriebswelle (5) des Sperriegels (6,7) exzentrisch angeordnet ist;
b) an dem Antriebsrad (12) ist ein Innennocken (13) und an der Antriebswelle (5) des Sperriegels (6,7) ist ein Mitnehmernocken (14) angeordnet, derart, daß, ausgehend von der Verriegelungsstellung, bei Drehung des Antriebsrades (12) in eine vorgegebene Richtung der Innennocken (13) gegen den Mitnehmernocken (14) drückt und **dadurch** die Antriebswelle (5) gegen den Druck einer Feder (15) mitdreht, wobei der Innennocken (13) und der Mitnehmernocken (14) erst außer Eingriff gelangen, wenn der Sperrriegel (6,7) seine Entriegelungsstellung erreicht hat;
c) zur Fixierung des Sperriegels (6,7) in der Entriegelungsstellung ist ein federbelastetes Sicherungselement (10) vorgesehen, welches bei Erreichen des Sperriegels (6,7) in der Entriegelungsstellung in eine dafür vorgesehene Rastnut (17) in der Antriebswelle (5) bzw. eines mit der Antriebswelle verbundenen Teiles eingreift.

2. Sperriegel und Vorrichtung zur Ansteuerung des mindestens von einer Verriegelungsstellung in eine Entriegelungsstellung betätigbaren, mit einer Antriebswelle versehenen Sperriegels (6,7), wobei der Sperriegel (6,7) über ein Getriebe (4) mit einem Antrieb (3) verbunden ist, **gekennzeichnet durch** die Merkmale:
a) das Getriebe (4) umfaßt ein mit dem Antrieb (3) in Verbindung stehendes Antriebsrad, welches innerhalb der Antriebswelle des Sperriegels (6,7) exzentrisch angeordnet ist;
b) an dem Antriebsrad ist ein Außennocken und an der Antriebswelle des Sperriegels (6,7) ist ein Mitnehmernocken angeordnet, derart, daß, ausgehend von der Verriegelungsstellung, bei Drehung des Antriebsrades in eine vorgegebene Richtung der Außennocken gegen den Mitnehmernocken drückt und **dadurch** die Antriebswelle gegen den Druck einer Feder mitdreht, wobei der Außennocken und der Mitnehmernokken erst außer Eingriff gelangen, wenn der Sperrriegel (6,7) seine Entriegelungsstellung erreicht hat;
c) zur Fixierung des Sperriegels (6,7) in der Entriegelungsstellung ist ein federbelastetes Sicherungselement (10) vorgesehen, welches bei Erreichen des Sperriegels (6,7) in der Entriegelungsstellung in eine dafür vorgesehene Rastnut (17) in der Antriebswelle bzw. eines mit der Antriebswelle verbundenen Teiles eingreift.

3. Sperriegel und Vorrichtung nach Anspruch 1 oder 2, **dadurch gekennzeichnet, daß** es sich bei dem Sicherungselement (10) um eine mit einem Hubmagneten (9') verbundene federbelastete Hubstange (9) handelt.

4. Sperriegel und Vorrichtung nach einem der Ansprüche 1 bis 3, **dadurch gekennzeichnet, daß** das Sicherungselement (10) mit einem Anschlag (18) verbunden ist, der beim Eingreifen des Sicherungselementes (10) in die Rastnut (17) der Antriebswelle (5) auf einen Schalter (19) einwirkt, welcher den Antrieb (3) über eine elektronische Schaltungsvorrichtung (20) abschaltet.

5. Sperriegel und Vorrichtung nach einem der Ansprüche 1 bis 4, **dadurch gekennzeichnet, daß** es sich bei der Rastnut (17) um eine in Drehrichtung verlaufende Längsnut handelt, deren Länge derart gewählt ist, daß bei in der Rastnut (17) befindlichem Sicherungselement (10) die Antriebswelle (5) noch so lange mit dem Antriebsrad (12) mitbewegbar ist, bis der Innennocken (13) bzw. Außennocken des Antriebsrades (12) und der Mitnehmernocken (14) der Antriebswelle (5) außer Eingriff gelangen.

6. Sperriegel und Vorrichtung nach Anspruch 4 oder 5, **dadurch gekennzeichnet, daß** die elektronische Schaltungsvorrichtung (20) den Antrieb (3) zeitverzögert erst abschaltet, wenn der Innennocken (13) bzw. Außennocken des Antriebsrades (12) und der Mitnehmernocken (14) der Antriebswelle (5) außer Eingriff gelangt sind.

7. Verwendung des Sperriegels und der Vorrichtung nach einem der Ansprüche 1 bis 6 zur Lenkungsverriegelung von Kraftfahrzeugen, wobei der Sperriegel (6,7) in eine entsprechende Nut (8) eines am Lenkrad des Kraftfahrzeuges angeordneten Schließringes (2) eingreift.

## Claims

1. A locking bolt and a device for controlling the locking bolt (6, 7) which can be actuated at least from a locked position into an unlocked position and is provided with a drive shaft (5), the locking bolt (6, 7) being connected to a drive (3) via a transmission (4),
**characterised by** the following features:
a) the transmission (4) comprises a drive wheel (12) communicating with the drive (3), inside which the drive shaft (5) of the locking bolt (6, 7) is eccentrically disposed;
b) disposed on the drive wheel (12) is an inner cam (13) and on the drive shaft (5) of the locking bolt (6, 7) is a driving cam (14) in such a manner that, starting from the locked position, upon the rotation of the drive wheel (12) in a predetermined direction the inner cam (12) presses against the driving cam (14) and thereby entrains the drive shaft (5) against the pressure of a spring (15), the inner cam (13) and the driving cam (14) only coming out of engagement when the locking bolt (6, 7) has reached its unlocked position;
c) to fix the locking bolt (6, 7) in the unlocked position, a spring-loaded securing element (10) is provided, which, when the locking bolt (6, 7) arrives in the unlocked position, engages in a detent groove (17) provided for this in the drive shaft (5) or a part connected to the drive shaft.

2. A locking bolt and a device for controlling the locking bolt (6, 7) which can be actuated at least from a locked position into an unlocked position and provided with a drive shaft, the locking bolt (6, 7) being connected to a drive (3),via a transmission (4)
**characterised by** the following features:
a) the transmission (4) comprises a drive wheel communicating with the drive (3) and disposed eccentrically inside the drive shaft of the locking bolt (6, 7),
b) disposed on the drive wheel is an outer cam and on the drive shaft of the locking bolt (6, 7) is a driving cam in such a manner that, starting from the locked position, upon the rotation of the drive wheel in a predetermined direction, the outer cam presses against the driving cam and thereby also rotates the drive shaft against the pressure of a spring, the outer cam and the driving cam only coming out of engagement when the locking bolt (6, 7) has reached its unlocked position;
c) to fix the locking bolt (6, 7) in the unlocked position, a spring-loaded securing element (10) is provided, which, when the locking bolt (6, 7) arrives in the unlocked position, engages in a detent groove (17) provided for it in the drive shaft or a part connected to the drive shaft.

3. A locking bolt and a device according to Claim 1 or 2, **characterised in that** the securing element (10) is a spring-loaded lifting rod (9) connected to a lifting magnet (9').

4. A locking bolt and a device according to one of Claims 1 to 3,
**characterised in that** the securing element (10) is connected to a stop (18), which, when the securing element (10) engages in the detent groove (17) of the drive shaft (5), acts on a switch (19) which switches off the drive (3) via an electronic switching device (20).

5. A locking bolt and a device according to one of Claims 1 to 4,
**characterised in that** the detent groove (17) is a longitudinal groove extending in the direction of rotation, the length of which is chosen in such a manner that when the securing element (10) is situated in the detent groove (17), the drive shaft (5) can only also be moved with the drive wheel (12) until the inner cam (13) or outer cam of the drive wheel (12) and the driving cam (14) of the drive shaft (5) come out of engagement.

6. A locking bolt and a device according to Claim 4 or 5, **characterised in that** the electronic switching device (20) only switches off the drive (3) with a time delay when the inner cam (13) or outer cam of the drive wheel (12) and the driving cam (14) of the drive shaft (5) are not in engagement.

7. Use of the locking bolt and the device according to one of Claims 1 to 6 for locking the steering of motor vehicles, wherein the locking bolt (6, 7) engages in a corresponding groove (8) of a closing ring (2) disposed on the steering wheel of the motor vehicle.

## Revendications

1. verrou de blocage et dispositif de commande du verrou de blocage (6, 7) pouvant être actionné au moins d'une position de verrouillage dans une position de déverrouillage, pourvu d'un arbre d'entraînement (5), dans lequel le verrou de blocage (6, 7) est connecté par le biais d'une transmission (4) à un entraînement (3), **caractérisés par** les caractéristiques suivantes :
a) la transmission (4) comprend une roue d'entraînement (12) en liaison avec l'entraînement (3), à l'intérieur de laquelle l'arbre d'entraînement (5) du verrou de blocage (6, 7) est disposé de manière excentrée ;
b) une came intérieure (13) est disposée sur la roue d'entraînement (12) et une came d'entraînement (14) est disposée sur l'arbre d'entraînement (5) du verrou de blocage (6, 7), de telle sorte que, partant de la position de verrouillage, lors de la rotation de la roue d'entraînement (12) dans une direction prédéfinie, la came intérieure (13) presse contre la came d'entraînement (14) et entraîne de ce fait l'arbre d'entraînement (5) à l'encontre de la pression d'un ressort (15), la came intérieure (13) et la came d'entraînement (14) parvenant seulement hors d'engagement lorsque le verrou de blocage (6, 7) a atteint sa position de déverrouillage ;
c) pour la fixation du verrou de blocage (6, 7) dans la position de déverrouillage, on prévoit un élément de fixation (10) sollicité par ressort, lequel vient en prise, après que le verrou de blocage (6, 7) a atteint la position de déverrouillage, dans une rainure d'encliquetage (17) prévue à cet effet dans l'arbre d'entraînement (5) ou une pièce connectée à l'arbre d'entraînement.

2. Verrou de blocage et dispositif de commande du verrou de blocage (6, 7) pouvant être actionné au moins d'une position de verrouillage dans une position de déverrouillage, pourvu d'un arbre d'entraînement, dans lequel le verrou de blocage (6, 7) est connecté par le biais d'une transmission (4) à un entraînement (3), **caractérisés par** les caractéristiques suivantes :
a) la transmission (4) comprend une roue d'entraînement en liaison avec l'entraînement (3), à l'intérieur de laquelle l'arbre d'entraînement du verrou de blocage (6, 7) est disposé de manière excentrée ;
b) une came extérieure est disposée sur la roue d'entraînement et une came d'entraînement est disposée sur l'arbre d'entraînement du verrou de blocage (6, 7), de telle sorte que, partant de la position de verrouillage, lors de la rotation de la roue d'entraînement dans une direction prédéfinie, la came extérieure presse contre la came d'entraînement et entraîne de ce fait l'arbre d'entraînement à l'encontre de la pression d'un ressort, la came extérieure et la came d'entraînement parvenant seulement hors d'engagement lorsque le verrou de blocage (6, 7) a atteint sa position de déverrouillage ;
c) pour la fixation du verrou de blocage (6, 7) dans la position de déverrouillage, on prévoit un élément de fixation (10) sollicité par ressort, lequel vient en prise, après que le verrou de blocage (6, 7) a atteint la position de déverrouillage, dans une rainure d'encliquetage (17) prévue à cet effet dans l'arbre d'entraînement (5) ou une pièce connectée à l'arbre d'entraînement.

3. Verrou de blocage et dispositif selon la revendication 1 ou 2, **caractérisés en ce que** l'élément de fixation (10) est une tige de levage (9) sollicitée par ressort connectée à un aimant de levage (9').

4. Verrou de blocage et dispositif selon l'une quelconque des revendications 1 à 3, **caractérisés en ce que** l'élément de fixation (10) est connecté à une butée (18) qui, lors de l'engagement de l'élément de fixation (10) dans la rainure d'encliquetage (17) de l'arbre d'entraînement (5), agit sur un commutateur (19) qui déconnecte l'entraînement (3) par le biais d'un dispositif de commutation électronique (20).

5. Verrou de blocage et dispositif selon l'une quelconque des revendications 1 à 4, **caractérisés en ce que** la rainure d'encliquetage (17) est une rainure longitudinale s'étendant dans le sens de rotation, dont la longueur est sélectionnée de telle sorte que lorsque l'élément de fixation (10) se trouve dans la rainure d'encliquetage (17), l'arbre d'entraînement (5) puisse encore être entraîné avec la roue d'entraînement (12) jusqu'à ce que la came intérieure (13) ou la came extérieure de la roue d'entraînement (12) et la came d'entraînement (14) de l'arbre d'entraînement (5) parviennent hors d'engagement.

6. Verrou de blocage et dispositif selon la revendication 4 ou 5, **caractérisés en ce que** le dispositif de commutation électronique (20) coupe l'entraînement (3) avec un retard temporel seulement après que la came intérieure (13) ou la came extérieure de la roue d'entraînement (12) et la came d'entraînement (14) de l'arbre d'entraînement (5) sont parvenues hors d'engagement.

7. Utilisation du verrou de blocage et du dispositif selon l'une quelconque des revendications 1 à 6, pour le verrouillage de direction de véhicules automobiles, dans laquelle le verrou de blocage (6, 7) vient en prise dans une rainure correspondante (8) d'un anneau de blocage (2) disposé sur le volant de direction du véhicule automobile.
